# EUROPEAN PATENT SPECIFICATION

(11) **EP 4 217 818 B1**
(45) Date of publication and mention of the grant of the patent: **11.02.2026**
(21) Application number: 21873450.7
(22) Date of filing: 23.09.2021
(51) Int. Cl.: B25H 7/04, B41J 3/407, G05D 1/00, G05B 19/4099

(54) **MOBILE PRINTING ROBOT SYSTEM, APPARATUS, AND METHOD TO AUTOMATICALLY PRINT CONSTRUCTION TRADE INFORMATION FOR PRINTED LAYOUT LINES**
MOBILES DRUCKROBOTERSYSTEM, VORRICHTUNG UND VERFAHREN ZUM AUTOMATISCHEN DRUCKEN VON BAUHANDELSINFORMATIONEN FÜR GEDRUCKTE LAYOUTLINIEN
SYSTÈME DE ROBOT D'IMPRESSION MOBILE, APPAREIL ET PROCÉDÉ D'IMPRESSION AUTOMATIQUE D'INFORMATIONS DE SECTEUR DE LA CONSTRUCTION POUR DES LIGNES D'AGENCEMENT IMPRIMÉES

(30) Priority: 23.09.2020 US 202063082334 P
(43) Date of publication of application: 02.08.2023
(73) Proprietor: Dusty Robotics, Inc., Mountain View, CA 94043 (US)
(72) Inventor: HERGET, Philipp Josef, Sunnyvale, CA 94086 (US); LAU, Tessa Ann, Sunnyvale, CA 94086 (US); THOMSON, Michael, San Carlos, CA 94070 (US)
(74) Representative: D Young & Co LLP
(86) International application number: PCT/US2021/051792
(87) International publication number: WO 2022/066939

(56) References cited:
- WO-A1-2019/144200
- WO-A1-2020/219728
- JP-A- 2019 196 988
- US-A1- 2012 320 058
- US-A1- 2015 158 182
- US-A1- 2019 196 492
- US-A1- 2019 354 075
- CROWE, STEVE: "Dusty Robotics FieldPrinter automates building layout", THE ROBOT REPORT, 16 December 2019 (2019-12-16), XP055921258, Retrieved from the Internet <URL:https://www.therobotreport.com/dusty-robotics-fieldprinter-automates-building-layout> [retrieved on 20211130]

## Description

### FIELD OF THE INVENTION

The present disclosure generally relates to marking construction trade information on a construction surface. More particularly, the present disclosure is related to using a mobile printing robot to print construction information on a construction surface while printing a building layout.

### BACKGROUND

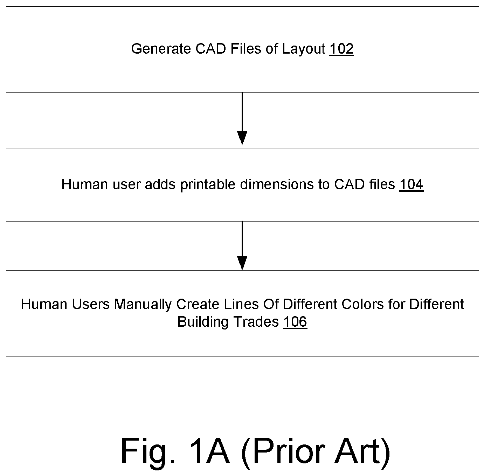

Building construction requires the coordination of many different construction trades to bring together a building with walls, plumbing, electrical, HVAC, etc. Each of these construction trades typically performs layout on each floor of the building to mark where on the floor they will be installing materials before construction begins. As illustrated in the flowchart of Fig. 1A, in block 102, CAD files of a layout are generated. In block 104, a human user adds printable dimensions to CAD files. In block 106, human users at a construction site manually create lines of different colors for different building trades. This has been traditionally done using a chalk covered string that is snapped to create a line.

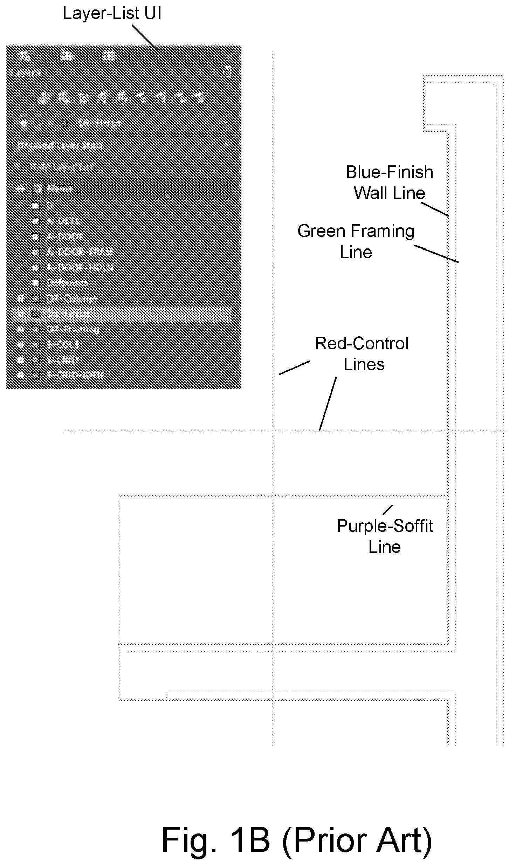

Fig. 1B shows an example of what a portion of a CAD file might look like. Fig. 1B shows the different lines in different colors as would be seen in the main window of a CAD program. The layer-list UI shows a series of layers. In this example, the layer list may include, for example, layers for framing, doors, columns, etc. The CAD lines that are displayed is a particular example of soffit lines, control lines, framing lines, and finish wall lines.

The CAD file typically visually distinguishes between lines for different building purposes by using different visual styles (e.g., line colors) and a line naming system. The example of Fig. 1B shows a layer list with a color key and a line naming system. In this example, the color key of the layer list UI of the layout shows framing lines (in green), finish wall lines (in blue), two control lines (in red), and a set of soffit lines (in purple). The soffit lines are off the captured screen in the layer list. For example, in the CAD, each of these individual construction features is placed in its own layer and generally assigned a unique color as a line style to make viewing in CAD easy.

The conventional physical process of doing construction of a building using building layout, based on the CAD files, typically begins with surveyors, who use total stations or other surveying equipment to mark control points at very specific locations on the floor based on the CAD files. These points are the ground truth for everything to be laid out on the floor and are typically etched in or otherwise permanently marked on the floor. Using these control points, control lines are established, which typically run the length of a floor and are used as a source of ground truth for measuring and locating all features in the building.

Layout is then carried out by each trade using construction drawings to determine the correct locations for materials to be installed. For lines that need to be marked on the floor, typically a tape measure is used to determine the correct location and then a chalk covered string is snapped on the ground to make the markings. For locations that require points, a total station is often used to guide a construction worker to the correct points, which are then marked on the ground with a marker.

Since the markings primarily consist of lines (points are usually marked by two intersecting lines), it can be difficult to tell different features apart. The ground may include markings for bottom track, drywall finishing layer, soffits, millwork, plumbing and HV AC runs, hangers for plumbing and HVAC, electrical runs, low voltage cabling, fixtures, fire sprinklers, and more. In addition, when a line can't be marked in the correct location because, for example a column, cover, or other obstacle is in the way, lines are put down with an offset from the intended location. For example, the line may be offset 1 ft to the north, to speed up the layout process. The tradesman must then be careful to interpret the line correctly and build features in the correct location.

To help separate one feature from another, colors are typically used. Each trade or subcontractor is assigned one color and makes all their markings in that color. In addition, a separate color is often used for control lines to distinguish them from other lines on the site. This can reduce the confusion, but the number of colors that can easily be distinguished in the dusty construction environment is typically limited to a few. To further help, some features are also labeled by hand, but this is a time consuming task that is avoided unless necessary.

The on-site use of different colors for different trades doesn't have to match the color key style of the original CAD drawings. The fact that the CAD drawings visually distinguish different types of lines aids construction workers in physically marking lines by color using different colored chalks and strings.

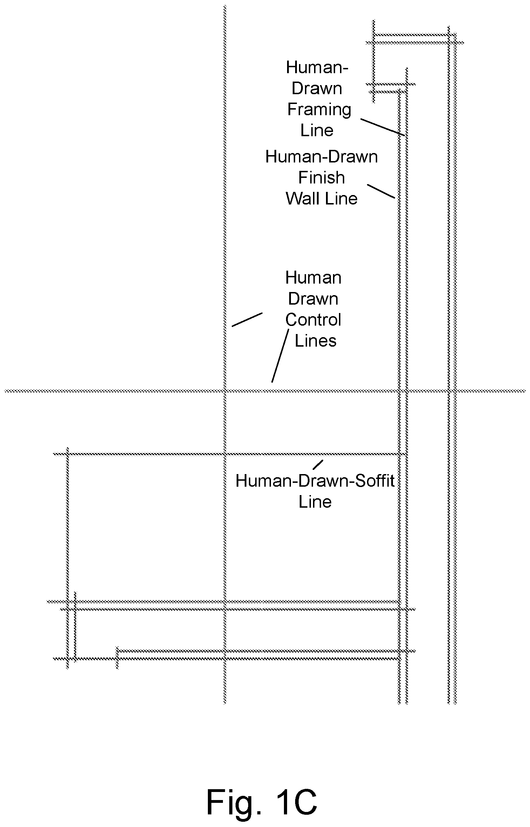

Fig. 1C shows an example of what a layout on the floor of a construction site might look like for the features shown in the CAD file in Fig. 1B using the conventional technique. As can be seen, most of the features shown in the layout in Fig. 1B would be performed by the same contractor and are therefore all laid out in a single color. The layout in Fig. 1B, therefore uses one color for the control lines (red) and a second color for all the other features (black). Furthermore, since lines are created with chalk and string and the precision is low, contractors will typically snap the lines a little longer to ensure the corners are accurate. As is evident from Fig. 1C it can become confusing as to which features are represented by each line. This effect is amplified as more and more trades add lines to the ground.

The conventional approach of using colored chalk and string to manually form lines for a particular trade has many limitations in terms of the amount of useful information that can be represented by a few different colors of chalk without overwhelming construction crews. And only a limited amount of additional information can be added via hand-drawn labels without creating a burden on construction crews to implement the labels and not make mistakes.

JP 2019 196988 A relates to an inking method or inking system US 2019/196492 A1 relates to automated construction scribing devices and methods of use. WO 2020/219728 A1 relates to a mobile printing robot and printing methods with line printing pathway optimization. However, none of these documents disclose, at least, a mobile printing robot system wherein line type attribute information providing descriptive information is based on: robot operator inputs, wherein in response to a robot operator input a line of the layout is to be printed offset relative to its original location and the line type attribute information comprises offset attributes; or descriptive attributes derived from CAD files of a building layout to be printed.

### SUMMARY

The present disclosure relates to systems and methods for using a mobile robot printing system to print a building layout along with additional line type attribute information to print information to aid construction crews. The present invention is defined in the appended independent claims. Advantageous features are set out in the appended dependent claims. Any embodiments or examples of the following description which are not within the scope of the appended claims are provided for illustrative purposes.

An example of a mobile printing robot system to print a building layout having a plurality of different layout line types with regards to their use by construction crews includes a mobile robot. The mobile robot includes a controller, a drive system, and a printing system. The system includes at least one computing device to generate line type attribute information printed inline with one or more lines of the building layout in a single pass of printing by the mobile printing robot.

### BRIEF DESCRIPTION OF THE DRAWINGS

The present disclosure is illustrated by way of example, and not by way of limitation in the figures of the accompanying drawings in which like reference numerals are used to refer to similar elements.
Fig. 1A is a flow chart of a conventional layout technique.
Fig. 1B illustrates a CAD layer list UI and display of an example set of lines of a building.
Fig. 1C illustrates an example of layout lines formed by using conventional techniques such as snapping chalk covered strings.
Fig. 2 is a block diagram illustrating a mobile robot system for printing line type attribute inline while printing lines in accordance with an implementation.
Fig. 3 is a block diagram of major components of a mobile printing robot in accordance with an implementation.
Fig. 4 is a flow chart of a method of using a mobile robot to print layout lines with inline line time information in accordance with an implementation.
Fig. 5 is a flow chart of a method of automatically extracting information from CAD layout files indicative of line style type and of using a mobile robot to print layout lines with inline line time information in accordance with an implementation.
Fig. 6 is a flow chart of a method in which a user can input optional line attributes modification and use a mobile robot to print layout lines with inline line time information in accordance with an implementation.
Fig. 7 is a flow chart of a method in which a user can input optional line attributes modification and use a mobile robot to print layout lines with inline line time information in accordance with an implementation.
Figs. 8 and 9 illustrate how the position and frequency line attribute information is inserted into a line may be adjusted to print lines at critical endpoints and corners in accordance with an implementation.
Figs. 10A, 10B, and 10C illustrate an example in which a number of short dashes is used to implement a code for a number of layers of sheetrock in accordance with an implementation.
Figs. 11A, 11B, 11C, and 11D illustrate examples of directional information in accordance with an implementation.
Fig. 12 illustrates an example of an offset to a line and an offset label in accordance with an implementation.
Figs. 13A, 13B, and 13C illustrate examples in which change to dashing or changes to color may be used to encode line attribute information in accordance with an implementation.
Fig. 14 illustrates an example of an offset line in accordance with an implementation.
Fig. 15 illustrates an example in which North-South and East-West control lines have an additional alphanumeric code to indicate the line direction in accordance with an implementation.
Fig. 16 illustrates three examples of a line printed with the word "offset" in accordance with an implementation.
Figs. 17, 18, and 19 show, at different levels of magnification, a portion of a printed layout in accordance with an implementation.

### DETAILED DESCRIPTION

The present disclosure describes systems and methods for using a mobile robot to print construction trade information on a construction surface related to a building layout. The construction trade information may be represented as line type style attribute information represented in alphanumeric text (e.g., "control 10"), optionally include directional information (e.g., "control west"), have offset information such as an offset distance and direction (e.g., "Offset 1 foot" and a directional arrow). The line type attribute information may, for example, identify a line as being associated with a particular type of construction feature, provide directional information, describe offsets, and may also potentially encode other types of information (e.g., number of sheets of sheetrock to be used, materials specification, or a preferred construction detail to aid a construction trade to do their work).

The line type attribute information may be encoded into a line as dots or dashes; as variations in color along a line, or by other techniques. Directional information (e.g., North-South or East-West original information may also be represented by letters, numbers, etc. Variations in line color (e.g., variations in total line color or variations in line color along a line) are also possible.

The line type attribute information may identify the general type of layout line (e.g., a control line) as well as including attributes describing other aspects of the line (e.g., its direction). Thus a single line may have several different attributes associated with it that are printed to help construction crews for particular building trades do their work.

The line type attribute information may be printed inline in a single pass of printing. That is, it may be printed within the width of printing head(s) of a mobile printing robot as a layout line is printed. The line type information can be printed with additional line type attributes printed in gaps in individual layout lines or, if the printhead(s) is sufficiently wide, to the side of a layout line. Printing the line type information inline with a line of a layout avoids, for example, a mobile printing robot having to do a second pass of printing to print line type attribute information.

A mobile printing robot system may include a mobile robot with a printing system to print layout lines based on CAD data files of the layout to be printed. These data files may, for example, be derived from CAD construction files.

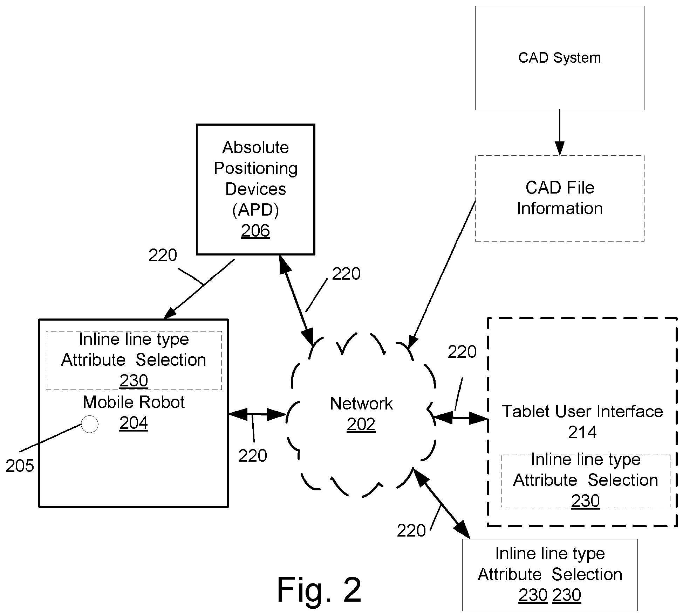

An exemplary mobile printing robot system is illustrated in Fig. 2. A mobile robot 204 may determine its position in different ways, but may get some of its position information from an absolute positioning device (APD 206), such as from a total system using a laser beam from the total station and a retroreflective device 205 on the surface of the mobile robot. Local network communication links 220 may be provided for the mobile robot 204 to communicate with a network 202 and the APD 206. However, it is understood that any of the devices could also communicate with one another directly, through a direct communication link such a as a wireless or optical communication link.

The mobile robot 204 may also communicate with a tablet user interface 214 of a tablet computing device of a user. In some implementations, the tablet computer device is used by an operator of the mobile print robot to make selections about line type attributes for a line, using software to implement inline line type attribute selection module 230. This may, in some cases, include software running in the tablet computing device automatically identifying default line type attributes from the CAD files. It may also include the operator making edits in the field via a user interface of the tablet computing device. For example, an operator may in some implementations add an offset to a layout line when there is an obstacle, along with offset information. The corresponding line to be printed by the mobile printing robot is then automatically adjusted and offset information added to the attributes automatically. For example, if the operator sees that a layout line needs to be shifted by 2 feet to avoid an obstacle, they can enter an offset into a user interface of 2 feet and the selected layout line is shifted 2 feet in the layout the mobile printing robot prints. Offset information may also be automatically added to the line to be printed by the mobile printing robot, such as the word "offset" and an offset distance and directional information.

However, some or all of the functionality of line type attribute selection module 230 could be performed in the mobile printing robot or in some other computing device (e.g., an external server). That is, while the tablet computing device may be used to perform various processes to select line type attributes, in the most general case the mobile robot system may use other computing devices in the overall system to perform similar functions. For example, the mobile robot could perform some or all of these function with the tablet computing device acting as a "thin client." Alternatively a separate server computing device could implement the functionality with the tablet computing device acting as a thin client.

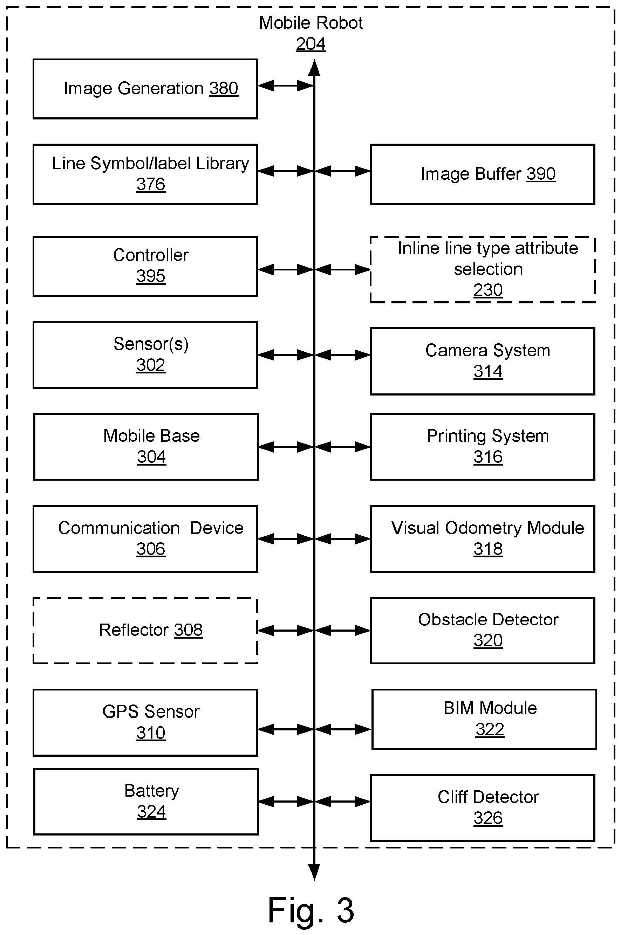

Referring to Fig. 3, the mobile robot 204 may, for example include one or more modules to support printing line type attribute information. For example an image generation module 380, image buffer 390, and line symbol/label library 376. As examples, the library 376 may store information about commonly used formats for printing line type attribute information, such as specific words or alphanumeric combinations, specific symbols (e.g., directional arrows), etc. The image buffer 390 and image generation module 380 may support switching back and forth between different images (e.g., back and forth between dashes and empty spaces for a dashed line; back and forth between a line section without an "offset" label and a line section with an "offset" label).

The mobile robot 204 supports inline line type information insertion, as illustrated in Fig. 3. As illustrated in Fig. 3, an exemplary implementation includes a controller 395, sensors 302, mobile base 304, communication device 306, reflector 308, GPS sensor 310, battery 324, cliff detector 326, building information management module 322 to generate general information about lines to be printed, obstacle detector 320, visual odometry module 318, printing system 316, and camera 314.

The mobile robot may in some implementations include an image generation module 380 to generate images, such as images of lines, line segments, text, symbols, etc. An image buffer, such as a rolling image buffer, may be provided to support alternating between different images while printing a layout. A line symbol/label library 376 may be provided to support printing line type attribute information.

Thus, there are different potential methods of operation in regards to processing CAD files and generating a sequence of objects to prints. In principle, the mobile robot could receive the CAD files, process them, and convert them into a sequence of objects to be printed by the mobile printing robot 204. A controller that interfaces with mobile robot could do this task on the behalf of the mobile robot.

In some implementations, the tablet computing device reads the CAD files, processes the CAD files, and tums the CAD files into a sequence of objects to be printed by the mobile printing robot 204. And, of course, in theory (although less likely in practice), there could be a division of labor, such as an external server-controller performing some tasks for reading CAD files and generating a sequence of objects to be printed and a tablet computing device with a user interface 214 performing other tasks.

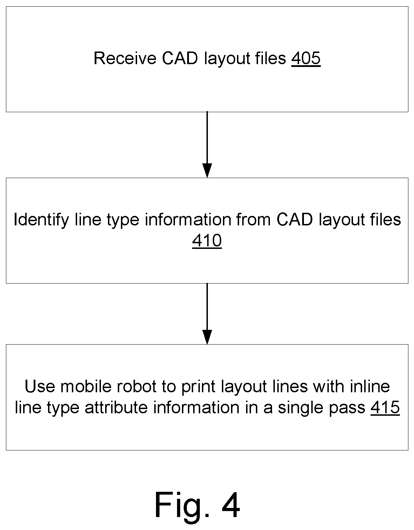

A high level flowchart of a method is illustrated in Fig. 4. Referring to the flowchart of Fig. 4, CAD files are received in block 405. The CAD files of the layout may, for example, be received by the tablet device as one example. Line type information is identified in block 410. This may be identified automatically by reading and understanding the layer names, colors, or other attributes of the original CAD files, or it may be identified with help of an operator. For example the operator may be provided default suggestions for line type attributes that they can confirm or edit. The mobile robot is used to print layout lines with inline type information in block 420. This may be done in a single printing pass.

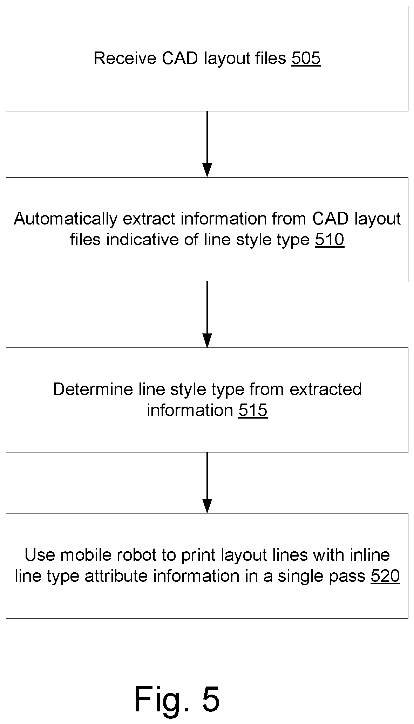

Fig. 5 is a flow chart illustrating a method in which information is automatically extracted from CAD files indicative of line style type. For example, automatic extraction of information from the CAD file to identify line style type could be based on layer names, or other information in the CAD files. In block 505, CAD layout files are received. In block 510, information indicative of line style type is automatically extracted from the CAD layout files. In block 515 a determination is made of the line style information from the extracted information. This may be implemented as a completely automated process. Alternatively, the line style type information in block 515 may generate a default determination that a user has the option to validate or correct. In block 520, the mobile robot uses the line style type information to print a layout line with inline line type information in a single pass.

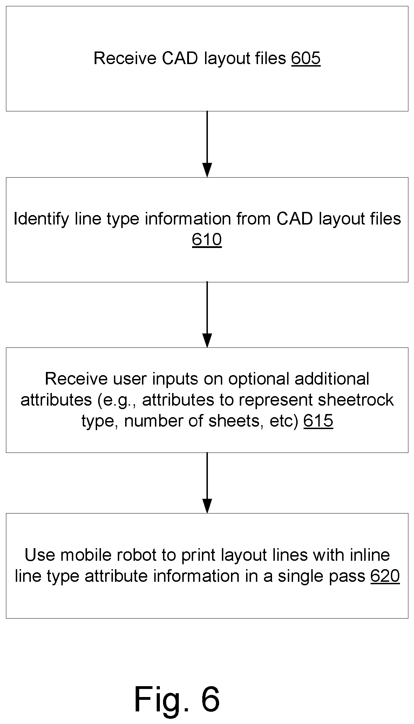

Fig. 6 is a flow chart illustrating a method in which user inputs are used to identify line type information. In block 605, CAD layout files are received. In block 610, basic line type information is identified from CAD layout files, or with operator assistance. In block 615, user inputs are received on additional optional line type attribute are received that may provide additional guidance for a construction crew aids to construction. For example, adding a line type attribute for a recommended type of building material (e.g., by a word, letter, or change in line shape) would be an example of optional attribute information. Very specific construction details could be printed For example, a number of layers of sheetrock to be used could be specified. In block 620, the mobile robot is used to print layout lines with inline line type information in a single pass.

In some implementations, the position(s) and frequency of gaps or symbols within a line is selected. Some portions of a line are more critical than others for construction crews to do alignment. For example, ends of lines and corners are typically more critical. In the process of building construction, accurate position information for a line is important. There can be short gaps or breaks in the line. But certain portions of the line are more critical than others for construction crews. For example, it's particularly important construction crews have accurate information regarding the ends of lines and comers. Rules can be included to automatically make adjustments to ensure that line ends/corner are printed with lines, i.e., ensure that line type information is not located on critical portions of a line. It's also important that printed lines provide sufficient lengths of line segments for alignment purposes. These considerations can be converted into rules determining the position and frequency of gaps/symbols within a line.

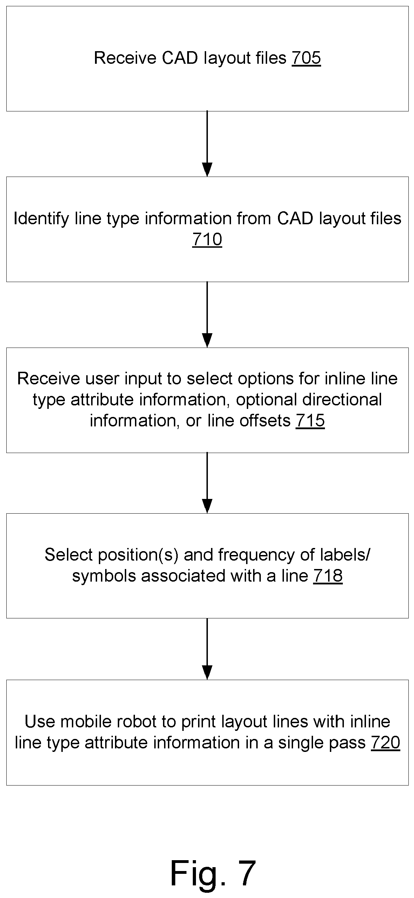

Fig. 7 is a flowchart of a method in which the position(s) and frequency of gaps/symbols associated with a line are selected. In block 705, CAD layout files are received. In block 710, line type information is identified from the CAD layout files. In block 715, inline type symbol information is generated, along with any optional directional information or line offsets. In block 718, the position and frequency of any gaps or symbols associated with the line is selected. For example, rules may be used to ensure, that critical portions of the lines at a corner are maintained along with enough of the line to aid the construction crew. Alternatively, if nothing is selected, a default position and frequency is used, and a default rule for corners may be used.

The line attribute information may be encoded in different ways. A segment of an original layout line modified to represent line attribute may be considered to be a label. For example, printing the word "control" in a gap in a layout line can be thought of as a label. Encoding line attribute information through dashed sections can also be considered to be a label. It's desirable to include at least one label identifying line type attribution formation for a line. But the position of the labels should not interfere with construction crews accurately reading critical line end points and comers. For a comparative short line, a single label may be sufficient. For a longer line, more than one label may be desirable to make it easy for construction crews to read the labels. A user may use a user interface to make adjustment to the position(s) and frequency of gaps/symbols/labels associated with a line. In block 720, the mobile robot is used to print layout lines with inline types information in a single pass.

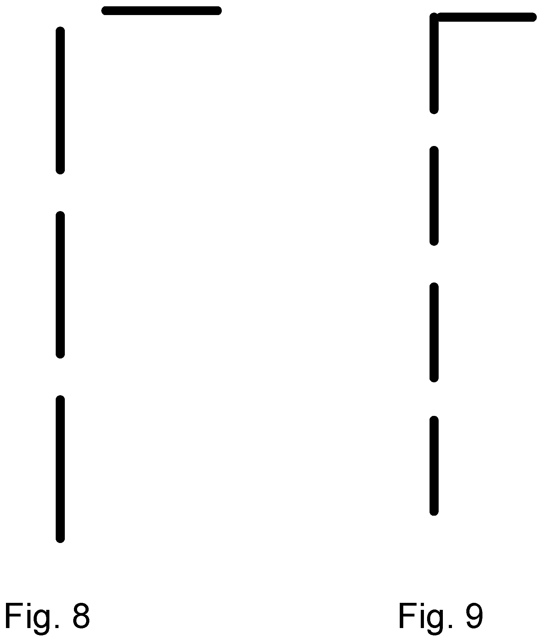

Figs. 8 and 9 illustrate an example of selecting the position(s) and frequency of gaps/symbols. In Fig. 8, an example is shown in which a symbol ends up in a critical corner level. For example, the symbol could be a gap, a word (e.g., "control"), a number (e.g., "12") or other variations. However, having the line sections not printed at corner regions is not ideal for construction crews to do alignment. Fig. 9 shows a variation in which the position of symbols/gaps is selected to print lines at critical regions, such as at line ends and comers.

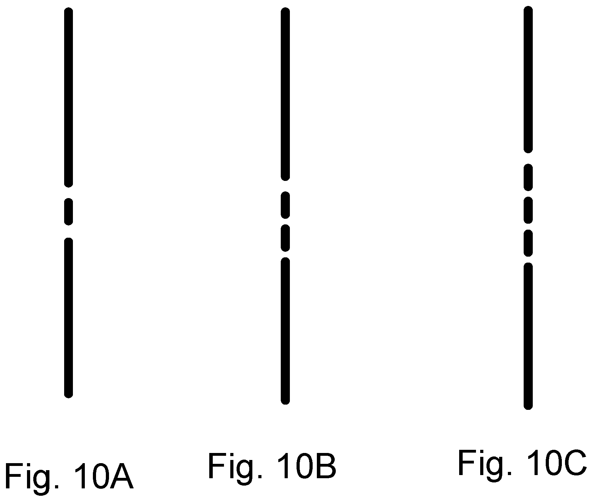

Figs. 10A, 10B, and 10C illustrate how changing the number of short segments may be used to implement a simple code. As one example, such a code could represent the number of layers of sheetrock to be used (e.g., 1 layer, 2 layers, or 3 layers). For this different line styles may be used. As an example, a line consisting of alternating dots and dashes represent a single layer of drywall, whereas a line consisting of a repeating pattern of two dashes and a dot may represent two drywall layers, and a line consisting of a repeating pattern of three dashes and a dot may represent a triple layer of drywall. More generally, words, numbers, or symbols may be used to recommend or specify construction details.

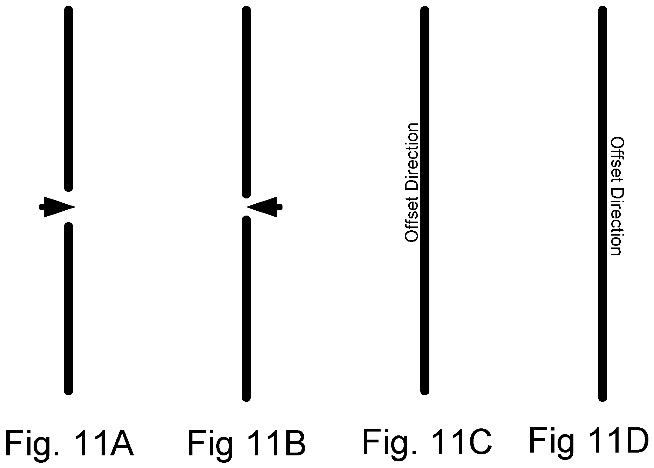

Figs. 11A, 11B, 11C, and 11D illustrate examples of how directional information may be included through arrows (Figs. 11A and 11B) or by the side of a line with which text appears (Figs. 11C and 11D). However, other combinations of words, numbers, or symbols may be used to represent directional information.

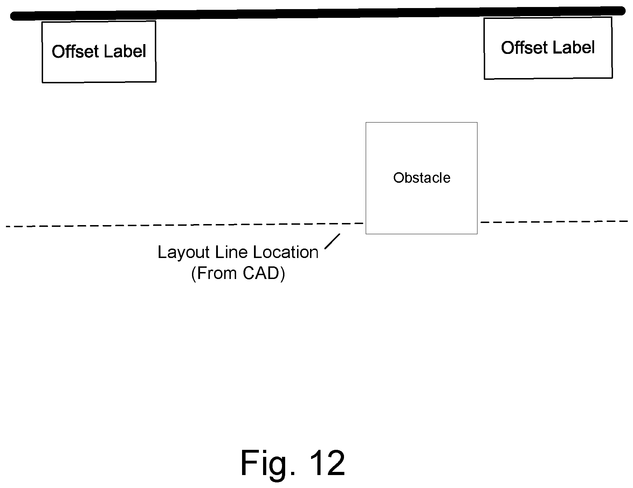

Fig. 12 illustrates an example in which an offset and an offset label is added to a line to deal with an obstacle. In this example, the line is offset to account for the obstacle, which might include, for example, an object left at the construction site. The offset line (bold) is offset from the original CAD layout line location and an offset label is printed indicating the direction in which the line would be offset too. Once the obstacle is removed, this label will allow the construction crew to translate the line to the correct location before building.

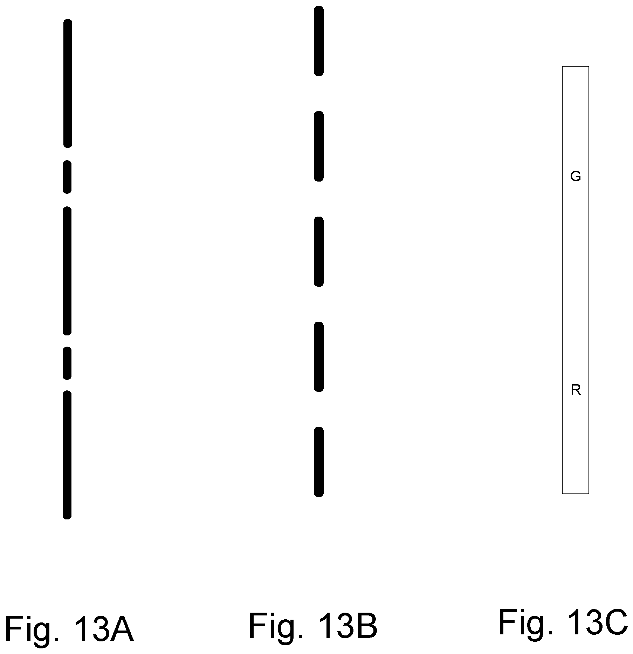

Figs. 13A, 13B, and 13C illustrate additional examples in which the length of segments may be used to encode attribute information (Figs. 13A and 13B) or lengths of colored segments (e.g., R for red, G for green) for mobile printing robots that support color printing. [We can also add different line widths. For example, a skinny dot, followed by a fat dash. This allows the line to be easily seen from a distance, yet the center of the line is clearly marked by looking at the locations of the skinny dots.

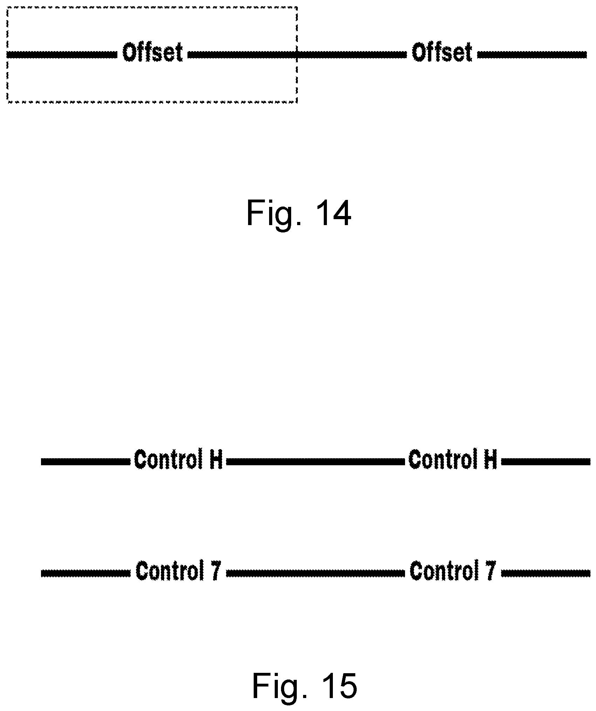

Fig. 14 illustrates an example in which the word "offset" is printed inline. The dashed box indicates a section that is repeated several times along a line. As previously discussed, in some implementations, some images are repeated along a layout line.

Fig. 15 illustrates examples in which the word "control" (with a location code H or 7, that specified which control line it is from the CAD file) is printed inline with a line.

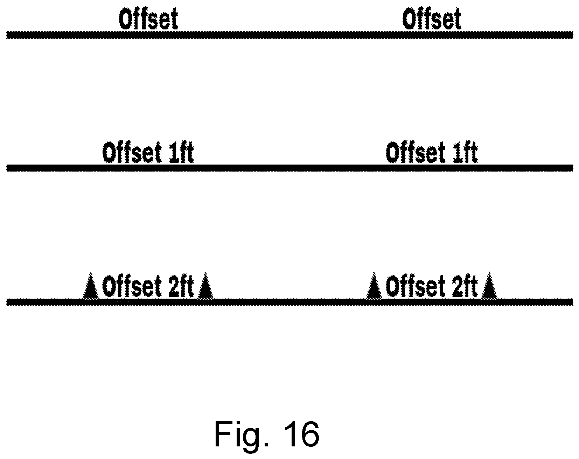

Fig. 16 shows variations of an offset line in which in some examples the exact offset distance and direction is also printed. The top line shows only the word "offset" printed. The middle line shows the word "offset" printed with the offset distance (1 foot). In this case, the text is written onto the side of the line that it should be offset to. The bottom line shows the word "offset" printed with the offset distance (2 feet) and a directional arrow to indicate where the intended layout line lies.

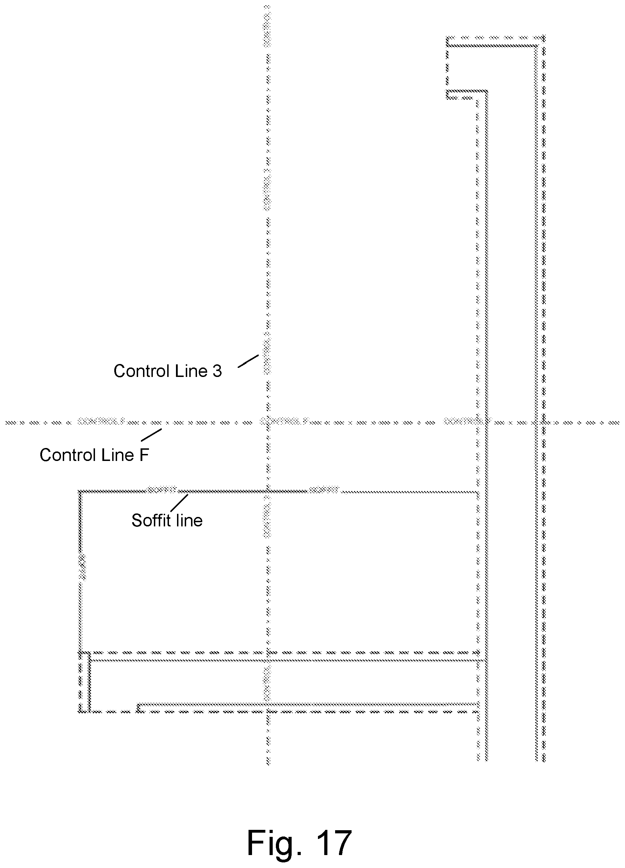

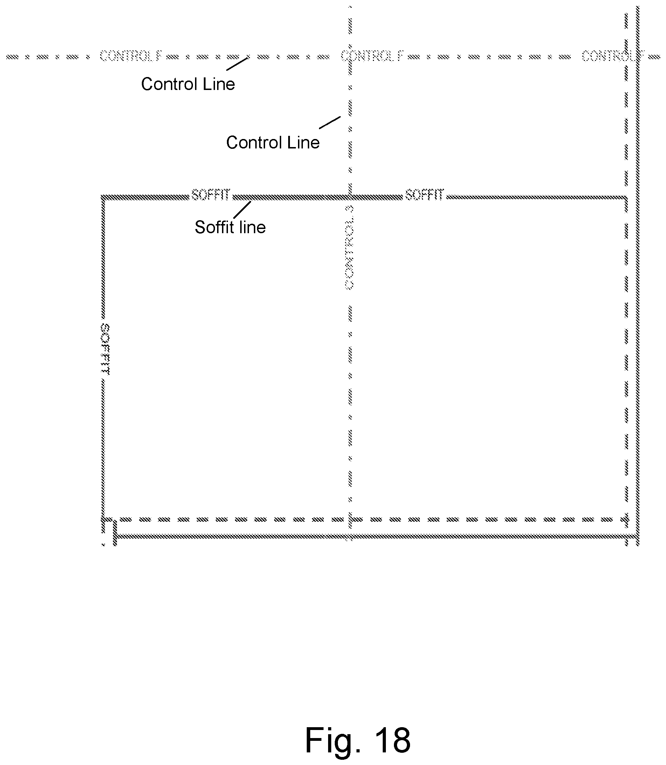

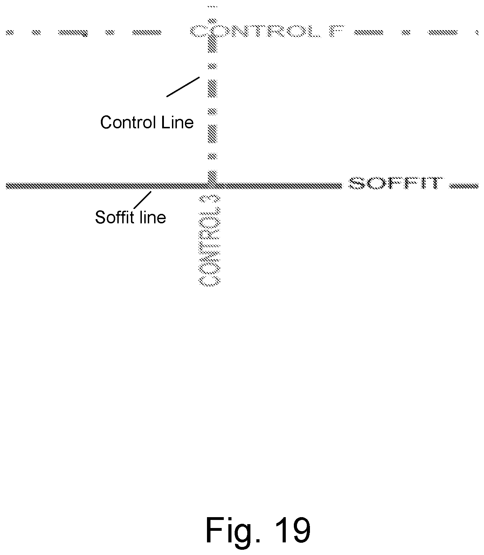

Fig. 17 illustrates an example with soffit lines with inline "soffit" labels and control lines represented with embedded "control words and having dots/dashes in other sections. Figs. 18 and 19 are close-up views of portions of Fig. 17. The Fig. shows the "line styles" for two different control lines that would typically run perpendicular to each other on the construction site, one with the text label "Control H" and the other with the label "Control 7."

The soffit line is created with a line style applied to the entire soffit layer and any line in that layer printed on the site will have the word soffit embedded in it, making it much easier to tell what these lines are actually for. For the control lines, a similar technique is used, except that in this case the label of the control lines is extracted from CAD and added to the text of the line style. In this case every individual control line on the site has a unique label identifying exactly which control line from the CAD it is. In the example shown in the Fig. 17, the control line F and the control line 3 have been printed. Additionally shown in the Fig. 17, line styles without text are also used to distinguish features on the site, making it easy to tell finish walls apart from framing lines. This further reduced the confusion about features on the site. For the control lines a dot-dash style is used, and for finish lines a dashed style is used. These again are applied to all lines represented by that one layer in CAD.

Many variations on the above-described examples are possible. Embodiments of this disclosure describes systems and methods of automatically labeling lines on the construction site by embedding labels into the line styles printed by the robot. Or perhaps more accurately, the printing process is automatic in terms of printing line style attribute information (e.g., symbols, text, numbers, etc.) into lines of a layout, although aspects of converting the CAD files into a sequence of objects to be printed may (in some implementations) employ the assistance of an external controller or the aid of an operator of a computing device. For example, in some implementations, an operator selects a layer of the CAD and assigns a label to that layer. Once that assignment is done, all the lines of the layer will be printed in the line style with that label. The amount of operator time to perform such a task is relatively minor. However, full automation may be possible using algorithms or by using machine leaming techniques to train a machine learning system to make similar types of decisions.

The embedded labels may, for example, describe a line style for construction crews. For example, the construction line style may identify a line as a soffit line, a control line, etc. More generally, the line style associated with embedded labels may include any type of information to aid a construction crew to understand the purpose or work to be performed for a line without the construction crew having to consult the CAD drawings.

This embedding of labels into the lines printed by the robot can be done by the mobile robot or associated controllers and interfaces. For example, a mobile robot may have a controller and a printing system to print a construction layout. An algorithm can be executed by the controller (or the tablet computing device used by the operator, or other user interface) and the printing system to read line/layer attribute information from the original CAD file and automatically generate labels that are printed during a line printing pass. For example, the original CAD files may include line style/color key information and other line attributes, such as layer level.

The labels may include, for example, text, numbers, symbols, or special characters. The labels may, for example, be interspersed along a line such that they can be printed while a line is being printed. The line type information may also be visually communicated in other ways, such as by using dashed lines, dashes/dots, etc. Also, if a color printhead is used, then variation in color may be used in different portions of a line or along a line of a particular line type.

While the mobile printing robot or associated interfaces may determine labels to be added (and any other optional line variations) from the CAD files, more generally, an intermediary computing device could be used, such as an intermediate computing device or server to perform some or all of the function associated with taking CAD files, reading attributes associated with a line, and generating labels to be added to lines and/or making changes to the presentation of lines, such as shifting the positions of lines.

It will be understood that many variations are contemplated regarding how the symbols are generated. This may include various combinations of the mobile printing robot and the tablet computing device automatically generating labels from the CAD layout files (or files based on the CAD files), although more generally it will be understood that 1) the mobile robot could perform all steps; 2) while complete automation is possible, the use of operator inputs to aid in making decisions about how to generate labels from CAD files is a viable and cost-effective approach; and 3) some or all of the steps in converting the CAD files to a sequence of objects to be printed could also be performed by additional controller or interface (not shown in the figures).

In some embodiments, the labels can be automatically (or with operator assistance) generated depending on the layer the line was in within the CAD file (e.g., from a layer list). The layer name or line type or style in CAD are examples of CAD information that can be used to determine labels to be drawn. In another embodiment, more generally a label can be derived from other characteristics of the CAD file, such as any line attribute in the CAD files from which an inference can be made regarding how the corresponding line would be used by construction crews. This could, for example, include information derived from directional aspects of lines in CAD files. For example, while some types of directional information in a CAD file may be fairly direct, other types of directional information may be inferred, such as inferring whether printed text will end up inside a wall as construction proceeds. Thus, in the most general case, information from the CAD files can be derived from things like layer levels, layer line type naming conventions, etc. but also include any other information derivable from analyzing how the CAD files would be used during construction.

As some examples, a set of rules or an algorithm may be created to 1) analyze attributes of the CAD files) and 2) use the attributes to determine labels to be drawn along a line and the placement of labels.

The labels may be generated based on actions taken on that line, such as moving the line so it can be printed as an offset line. In yet other embodiments, the line style is asymmetric and used to indicate a directional aspect of the line in CAD, for example offset lines may indicate which direction the lines are shifted. In another similar embodiment, an asymmetrical line style is used to ensure the printed text will end up inside a wall where it will be covered and not visible once construction is complete. In some of these embodiments the side of the line the label is on (left vs right) will also depend on the direction the robot is traveling when the line is being printed. For example, if the robot is printing while traveling north and the offset line needs to be shifted east, the text would be added to the left side of the line. However, if the robot is traveling south, the same text would be printed on the right side of the line to indicate the same offset direction. This is true of any asymmetrical label, text, or other feature of the line.

More generally, a wide variety of options may be supported to visually distinguish (or otherwise add useful information) to a layout line for use by construction crews. And the insertion of labels can be implemented while the mobile robot is printing a layout. That is, it can be performed in a single pass of printing to print labels for lines and/or otherwise visually distinguish a line. For example, along the length of a line, labels can be interspersed.

The position, size, and frequency with which labels are interspersed along a line can be selected to 1) not interfere with the accuracy with which construction crews can use the line; and 2) be sized, positioned, and be frequent enough to be easy to read and interpret. For example, on a very long line, more than one label could be included. However, on a shorter line, at least one label may be provided.

In some implementations, the mobile printing robot includes an inkjet printer having a plurality of nozzles that are capable of printing images on the construction surface of a given width. In one example the printer used by the mobile robot is 600 DPI and has a ½ inch width, for a total of 300 nozzles. In another example, the printer is 3 inches wide with a total of 500 nozzles. Or in another example, the printhead may be 1.5 inches wide with 20 nozzles. These printers are capable of printing any image including text and lines or symbols up to the width of the print head.

One aspect is that labels can be added to lines and printed in a single printing pass. In prior approaches, the robot would use the printer on the mobile robot to print the lines needed for construction in a printing pass.. Some limited text to label objects on the construction site could, in principal, be printed in a separate pass. However, in this conventional operating mode all of the lines and labels must be created as separate objects in CAD and then the objects are printed in separate passes by the printing robot. This is time consuming both in the amount of CAD work, and in terms of robot printing time. As a result, in prior mobile printing robot systems the lines weren't extensively labelled because of the additional CAD work required and the requirement to perform a second pass of printing.

In some implementations, the printing system of the mobile robot includes a rolling image buffer. A rolling image buffer may, for example, contain an image of a line followed by text label, causing the printer to switch between printing a line and printing a label within one image and requiring minimal computing resources. Adding the capability on the robot to print images with a rolling buffer, such that as the image completes printing a new copy of the same image is automatically appended, can allow an image consisting of both one or more lines combined with text to be used as a "line style" that can be printed on the ground.

Moreover, many different lines styles can be supported. Thus, for example, a mobile robot can implement, if desired, a large number of different types of line styles. As one example, text in labels may be written in different preferred language (e.g., English text, Spanish text, bilingual text), etc. Individual lines may also include breaks (e.g., labels plus visually distinctive line patterns in some sections). Many possible variations are thus possible in the manner with which a printing line provides line type information and/or other information to aid construction crews. Additionally the line itself may consist of text. For example, a black line with white text (or areas with no ink that form the text). This gives the appearance of a line from a distance, but contains text when viewed up close.

One example of a "line style" that includes this feature is shown in Fig. 14. A line is shown that periodically has the word "offset" inline with the line. The dashed box shown in Fig. 14 highlights an area of the line that contains one "image" of the "line style". This image is repeated over and over again as the line is printed and may end anywhere along the image as the line ends. The spacing of the text can be adjusted by adjusting the base image. For example, one may want the word "offset" to appear every 2 ft. Furthermore, the location of the text within the image can be adjusted to be toward the start of the line to ensure that even when printing a short line, the word "offset" will appear at least once.

Both the tasks of creating CAD and printing are simplified by using these "line styles" and selecting the text for the "line style" based on either a layer name or line type or style in CAD. For example, all lines that represent soffits can be selected for printing from CAD by selecting the soffit layer and be assigned a printing "line style" that contains the word "Soffit" along with the line. When this is printed on the ground it is then very clear what these lines represent. This is a way to reduce confusion and save crew time in referring back to drawings to interpret the meaning of the lines on the ground. Using this method, the text is created without any extensive CAD work time, or extra robot printing time.

Offset lines may be created for a variety of reasons. The line may be too close to the edge of the building to be safely accessed in the conditions present when the layout crew is on site. The line may be in a location that has a temporary covering over it for safety or other reasons, or the line may simply be inaccessible because of materials or construction equipment present on the site. In any case, the line can be laid out with an offset, or displaced by a fixed distance. In this case it is critical that the line be translated to the correct location and the feature be built in the correct location when it comes time to construct the feature.

Offset lines may be printed with the word "offset" embedded into the "line style". However with offset lines another piece of information is critical to building correctly. The construction crew needs to know in which direction the offset line needs to be translated in addition to the distance it needs to be moved. Fig. 16 shows a variety of asymmetric "line styles" containing both the word "offset" and some indication of direction. The topmost style simply has the word "offset" written on one side of the line. This would indicate that the true line is offset in the direction of the text from the line that is next to it. In the middle of the figure the word "offset" is combined with the distance "1 ft" to indicate what distance to offset the feature to be constructed. Finally in the bottom of the figure, some arrows are included in addition to the text to make it very clear what direction to displace the line.

This asymmetric style can also be applied to other lines on the construction site. For example the finishing drywall lines could also contain the text "finish" to make the purpose of the lines clear. However, often when the building is to have a bare concrete floor, it is undesirable to mark any lines outside of the drywall layer. Here an asymmetric line style can be used where the text is written on the wall side of the line. In other locations, it may be critical that the line is visible at all locations and is not interrupted anywhere by text. For these types of lines it may also be beneficial to have a "line style" with the text next to rather than in line with the line. This is important when accurate corners need to be represented.

Often precise corners are desired in the layout, so the end points of walls and other features are precisely defined. In this case, the printer may contain two different images used interchangeably. The printer would print an image of a line immediately followed by an image of text and then repeat the pattern. The net effect is the same, a "line style" containing long portions of straight lines interrupted briefly with strings of text. By using two separate images, however, the system can be programmed to avoid the image containing text within a certain distance of any intersections of lines. The system would therefore alternate lines and text, but insert an extra line anywhere precision is needed due to intersections or other important features. These lines look identical to the labeled lines, but having a lack of any labels at locations where lines intersect on the ground.

**In** the above description, for purposes of explanation, numerous specific details were set forth. It will be apparent, however, that the disclosed technologies can be practiced without any given subset of these specific details. In other instances, structures and devices are shown in block diagram form. For example, the disclosed technologies are described in some implementations above with reference to user interfaces and particular hardware.

Reference in the specification to "one embodiment", "some embodiments" or "an embodiment" means that a particular feature, structure, or characteristic described in connection with the embodiment is included in at least some embodiments of the disclosed technologies. The appearances of the phrase "in some embodiments" in various places in the specification are not necessarily all referring to the same embodiment.

Some portions of the detailed descriptions above were presented in terms of processes and symbolic representations of operations on data bits within a computer memory. A process can generally be considered a self-consistent sequence of steps leading to a result. The steps may involve physical manipulations of physical quantities. These quantities take the form of electrical or magnetic signals capable of being stored, transferred, combined, compared, and otherwise manipulated. These signals may be referred to as being in the form of bits, values, elements, symbols, characters, terms, numbers, or the like.

These and similar terms can be associated with the appropriate physical quantities and can be considered labels applied to these quantities. Unless specifically stated otherwise as apparent from the prior discussion, it is appreciated that throughout the description, discussions utilizing terms, for example, "processing" or "computing" or "calculating" or "determining" or "displaying" or the like, may refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

The disclosed technologies may also relate to an apparatus for performing the operations herein. This apparatus may be specially constructed for the required purposes, or it may include a general-purpose computer selectively activated or reconfigured by a computer program stored in the computer.

The disclosed technologies can take the form of an entirely hardware implementation, an entirely software implementation or an implementation containing both software and hardware elements. In some implementations, the technology is implemented in software, which includes, but is not limited to, firmware, resident software, microcode, etc.

Furthermore, the disclosed technologies can take the form of a computer program product accessible from a non-transitory computer-usable or computer-readable medium providing program code for use by or in connection with a computer or any instruction execution system. For the purposes of this description, a computer-usable or computer-readable medium can be any apparatus that can contain, store, communicate, propagate, or transport the program for use by or in connection with the instruction execution system, apparatus, or device.

A computing system or data processing system suitable for storing and/or executing program code will include at least one processor (e.g., a hardware processor) coupled directly or indirectly to memory elements through a system bus. The memory elements can include local memory employed during actual execution of the program code, bulk storage, and cache memories which provide temporary storage of at least some program code in order to reduce the number of times code must be retrieved from bulk storage during execution.

Input/output or I/O devices (including, but not limited to, keyboards, displays, pointing devices, etc.) can be coupled to the system either directly or through intervening I/O controllers.

Network adapters may also be coupled to the system to enable the data processing system to become coupled to other data processing systems or remote printers or storage devices through intervening private or public networks. Modems, cable modems and Ethemet cards are just a few of the currently available types of network adapters.

Finally, the processes and displays presented herein may not be inherently related to any particular computer or other apparatus. Various general-purpose systems may be used with programs in accordance with the teachings herein, or it may prove convenient to construct a more specialized apparatus to perform the required method steps. The required structure for a variety of these systems will appear from the description below. In addition, the disclosed technologies were not described with reference to any particular programming language. It will be appreciated that a variety of programming languages may be used to implement the teachings of the technologies as described herein.

The foregoing description of the implementations of the present techniques and technologies has been presented for the purposes of illustration and description. It is not intended to be exhaustive or to limit the present techniques and technologies to the precise form disclosed. Many modifications and variations are possible in light of the above teaching. It is intended that the scope of the present techniques and technologies be limited not by this detailed description. The invention is defined in the appended claims. Likewise, the particular naming and division of the modules, routines, features, attributes, methodologies and other aspects are not mandatory or significant, and the mechanisms that implement the present techniques and technologies or its features may have different names, divisions and/or formats. Furthermore, the modules, routines, features, attributes, methodologies and other aspects of the present technology can be implemented as software, hardware, firmware or any combination of the three. Also, wherever a component, an example of which is a module, is implemented as software, the component can be implemented as a standalone program, as part of a larger program, as a plurality of separate programs, as a statically or dynamically linked library, as a kernel loadable module, as a device driver, and/or in every and any other way known now or in the future in computer programming. Additionally, the present techniques and technologies are in no way limited to implementation in any specific programming language, or for any specific operating system or environment. Accordingly, the disclosure of the present techniques and technologies is intended to be illustrative, but not limiting.

## Claims

1. A mobile printing robot system (204) to print a building layout having a plurality of different layout line types with regards to their use by construction crews, the mobile printing robot system, comprising:
a mobile robot, including
a controller (395),
a drive system, and
a printing system (316);
the system including at least one computing device to generate line type attribute information printed inline with one or more lines of the building layout in a single pass of printing by the mobile printing robot;
the line type attribute information providing descriptive information based on at least one of: robot operator inputs; and descriptive attributes derived from CAD files of a building layout to be printed, **characterized in that**
in response to a robot operator input, a line of the layout is to be printed offset relative to its original location and the line type attribute information comprises offset attributes.

2. The mobile printing robot system of claim 1, wherein the line type attribute information comprises at least one of: text, geometric symbols, line gaps, dashes, colors, and numbers.

3. The mobile printing robot of system claim 1, wherein the layout line is printed as a sequence of line segments and label sections having line type attribute information embedded in the label.

4. The mobile printing robot system of claim 3, wherein a position or frequency of the line segments and label sections automatically adjusted to guarantee line segments are printed at ends of layout lines and along corners.

5. The mobile printing robot system of claim 1, wherein the line type attribute information comprises directional information.

6. The mobile printing robot system of claim 1, wherein the line type attribute information further comprises construction details associated with a line of a layout.

7. The mobile printing robot system of claim 1, wherein the computing device is a mobile computing device of an operator of the mobile printing robot, wherein the operator edits line type attribute information.

8. The mobile printing robot system of claim 1, wherein the line type attribute information comprises text identifying at least one or a control line and a soffit line.

9. A method, comprising:
converting CAD layout files of building layout to a sequence of lines to be printed in a single pass by a mobile robot (204) along with information identifying line type attribute information for at least one line, the line type attribute information providing descriptive information based on at least one of: robot operator inputs; and descriptive attributes derived from at least one CAD file of a building layout to be printed;
receiving a robot operator input selecting a line offset for a selected line and adjusting the printing of the selected line to be printed to have the offset; and
printing, by a mobile printing robot, lines of the building layout on a construction surface in a single pass wherein the line style is determined by the line type attributes.

10. The method of claim 9, further comprising generating an offset label for a line.

11. The method of claim 9, wherein the line type attribute information further comprises directional information for the line.

12. The method of claim 9, wherein the line type attribute information further comprises construction details.

13. The method of claim 9, wherein a position and arrangement of the line type attribute information is selected to prevent printing the line type information at the ends of lines and in corners.

14. The method of claim 9, wherein the layout line is printed as a sequence of line segments and label sections having line type attribute information embedded in the label.

15. The method of claim 9, wherein the line type attribution information comprises text identifying at least one of a control line and a soffit line.

## Patentansprüche

1. Mobiles Druckrobotersystem (204) zum Drucken eines Gebäudelayouts mit einer Vielzahl von unterschiedlichen Layoutlinientypen hinsichtlich ihrer Verwendung durch Baubesatzungen, wobei das mobile Druckrobotersystem Folgendes umfasst:
einen mobilen Roboter, einschließlich
einer Steuerung (395),
eines Antriebssystems, und
eines Drucksystems (316);
wobei das System mindestens eine Rechenvorrichtung zum Erzeugen von Linientyp-Attributinformationen aufweist,
die inline mit einer oder mehreren Linien des Gebäudelayouts in einem einzigen Druckdurchgang durch den mobilen Druckroboter gedruckt werden;
wobei die Linientyp-Attributinformationen beschreibende Informationen basierend auf mindestens einem von Folgendem bereitstellen: Roboterbedienereingaben; und
beschreibende Attribute, die von CAD-Dateien eines zu druckenden Gebäudelayouts abgeleitet sind, **dadurch gekennzeichnet, dass**
als Reaktion auf eine Roboterbedienereingabe eine Linie des Layouts relativ zu ihrer ursprünglichen Position versetzt gedruckt werden soll, und die Linientyp-Attributinformationen Versatzattribute umfassen.

2. Mobiles Druckrobotersystem nach Anspruch 1, wobei die Linientyp-Attributinformationen mindestens eines von Folgendem umfassen: Text, geometrische Symbole, Linienlücken, Striche, Farben und Zahlen.

3. Mobiles Druckrobotersystem nach Anspruch 1, wobei die Layoutlinie als eine Sequenz von Liniensegmenten und Etikettenabschnitten mit in das Etikett eingebetteten Linientyp-Attributinformationen gedruckt wird.

4. Mobiles Druckrobotersystem nach Anspruch 3, wobei eine Position oder Frequenz der Liniensegmente und Etikettenabschnitte automatisch angepasst wird, um sicherzustellen, dass Liniensegmente an Enden von Layoutlinien und entlang von Ecken gedruckt werden.

5. Mobiles Druckrobotersystem nach Anspruch 1, wobei die Linientyp-Attributinformationen Richtungsinformationen umfassen.

6. Mobiles Druckrobotersystem nach Anspruch 1, wobei die Linientyp-Attributinformationen ferner Konstruktionsdetails umfassen, die mit einer Linie eines Layouts assoziiert sind.

7. Mobiles Druckrobotersystem nach Anspruch 1, wobei die Rechenvorrichtung eine mobile Rechenvorrichtung eines Bedieners des mobilen Druckroboters ist, wobei der Bediener Linientyp-Attributinformationen bearbeitet.

8. Mobiles Druckrobotersystem nach Anspruch 1, wobei die Linientyp-Attributinformationen Text umfassen, der mindestens eine oder eine Steuerleitung und eine Soffitleitung identifiziert.

9. Verfahren, das Folgendes umfasst:
Umwandeln von CAD-Layoutdateien eines Gebäudelayouts in eine Folge von Linien, die in einem einzigen Durchlauf durch einen mobilen Roboter (204) gedruckt werden sollen, zusammen mit Informationen, die Linientyp-Attributinformationen für mindestens eine Linie identifizieren, wobei die Linientyp-Attributinformationen beschreibende Informationen basierend auf mindestens einem der Folgenden bereitstellen: Roboterbedienereingaben; und beschreibende Attribute, die von mindestens einer CAD-Datei eines zu druckenden Gebäudelayouts abgeleitet sind;
Empfangen einer Roboterbedienereingabe, die einen Linienversatz für eine ausgewählte Linie auswählt, und Anpassen des Druckens der ausgewählten zu druckenden Linie, so dass der Versatz vorhanden ist; und
Drucken, durch einen mobilen Druckroboter, von Linien des Gebäudelayouts auf einer Bauoberfläche in einem einzigen Durchgang, wobei der Linienstil durch die Linientypattribute bestimmt wird.

10. Verfahren nach Anspruch 9, ferner umfassend das Erzeugen eines Versatzetiketts für eine Linie.

11. Verfahren nach Anspruch 9, wobei die Linientyp-Attributinformationen ferner Richtungsinformationen für die Linie umfassen.

12. Verfahren nach Anspruch 9, wobei die Linientyp-Attributinformationen ferner Konstruktionsdetails umfassen.

13. Verfahren nach Anspruch 9, wobei eine Position und Anordnung der Linientyp-Attributinformationen ausgewählt wird, um ein Drucken der Linientyp-Informationen an den Enden von Linien und in Ecken zu verhindern.

14. Verfahren nach Anspruch 9, wobei die Layoutlinie als eine Sequenz von Liniensegmenten und Etikettenabschnitten mit in das Etikett eingebetteten Linientyp-Attributinformationen gedruckt wird.

15. Verfahren nach Anspruch 9, wobei die Linientyp-Attributinformationen Text umfassen, der eine Steuerleitung und/oder eine Soffitleitung identifiziert.

## Revendications

1. Système robotique d'impression mobile (204), destiné à imprimer un agencement de bâtiment présentant une pluralité de types de lignes d'agencement différents en fonction de leur utilisation par les équipes de construction, le système robotique d'impression mobile comprenant :
un robot mobile, comportant
un dispositif de commande (395),
un système d'entraînement, et
un système d'impression (316) ;
le système comportant au moins un dispositif informatique pour générer des informations d'attributs de type de ligne imprimées en ligne avec une ou plusieurs lignes de l'agencement de bâtiment en un seul passage d'impression par le robot d'impression mobile ;
les informations d'attributs de type de ligne fournissant des informations descriptives basées sur au moins un parmi : des entrées de l'opérateur du robot ; et des attributs descriptifs dérivés de fichiers CAO d'un agencement de bâtiment à imprimer, **caractérisé en ce que** en réponse à une entrée de l'opérateur du robot, une ligne de l'agencement doit être imprimée de manière décalée par rapport à son emplacement d'origine et les informations d'attributs de type de ligne comprennent des attributs de décalage.

2. Système robotique d'impression mobile selon la revendication 1, dans lequel les informations d'attributs de type de ligne comprennent au moins un parmi : du texte, des symboles géométriques, des espaces entre les lignes, des tirets, des couleurs et des chiffres.

3. Système robotique d'impression mobile selon la revendication 1, dans lequel la ligne de l'agencement est imprimée sous la forme d'une séquence de segments de ligne et de sections d'étiquette présentant des informations d'attributs de type de ligne intégrées dans l'étiquette.

4. Système robotique d'impression mobile selon la revendication 3, dans lequel une position ou une fréquence des segments de ligne et des sections d'étiquette est automatiquement ajustée pour garantir que les segments de ligne sont imprimés aux extrémités des lignes de l'agencement et le long des coins.

5. Système robotique d'impression mobile selon la revendication 1, dans lequel les informations d'attributs de type de ligne comportent des informations directionnelles.

6. Système robotique d'impression mobile selon la revendication 1, dans lequel les informations d'attributs de type de ligne comportent en outre des détails de construction associés à une ligne d'un agencement.

7. Système robotique d'impression mobile selon la revendication 1, dans lequel le dispositif informatique est un dispositif informatique mobile d'un opérateur du robot d'impression mobile, dans lequel l'opérateur modifie les informations d'attributs de type de ligne.

8. Système robotique d'impression mobile selon la revendication 1, dans lequel les informations d'attributs de type de ligne comportent un texte identifiant au moins une ligne de contrôle et une ligne de soffite.

9. Procédé comprenant :
la conversion de fichiers d'agencement CAO d'un agencement de bâtiment en une séquence de lignes à imprimer en un seul passage par un robot mobile (204) avec des informations identifiant des informations d'attributs de type de ligne pour au moins une ligne, les informations d'attributs de type de ligne fournissant des informations descriptives basées sur au moins un parmi :
des entrées de l'opérateur du robot ; et des attributs descriptifs dérivés d'au moins un fichier CAO d'un agencement de bâtiment à imprimer ;
la réception d'une entrée de l'opérateur du robot sélectionnant un décalage de ligne pour une ligne sélectionnée et ajustant l'impression de la ligne sélectionnée à imprimer pour qu'elle présente le décalage ; et
l'impression, par un robot d'impression mobile, de lignes de l'agencement de bâtiment sur une surface de construction en un seul passage, le style de ligne étant déterminé par les attributs de type de ligne.

10. Procédé selon la revendication 9, comprenant en outre la génération d'une étiquette de décalage pour une ligne.

11. Procédé selon la revendication 9, dans lequel les informations d'attributs de type de ligne comportent en outre des informations directionnelles pour la ligne.

12. Procédé selon la revendication 9, dans lequel les informations d'attributs de type de ligne comportent en outre des détails de construction.

13. Procédé selon la revendication 9, dans lequel une position et une disposition des informations d'attributs de type de ligne sont sélectionnées de manière à empêcher l'impression des informations de type de ligne aux extrémités des lignes et dans les coins.

14. Procédé selon la revendication 9, dans lequel la ligne de l'agencement est imprimée sous la forme d'une séquence de segments de ligne et de sections d'étiquette présentant des informations d'attributs de type de ligne intégrées dans l'étiquette.

15. Procédé selon la revendication 9, dans lequel les informations d'attribution de type de ligne comportent un texte identifiant au moins une ligne de contrôle et une ligne de soffite.
